Europäisches Patentamt

European Patent Office

Office européen des brevets

(19)

(11) **EP 1 693 584 A1**

(12) **EUROPEAN PATENT APPLICATION**
published in accordance with Art. 158(3) EPC

(43) Date of publication:
**23.08.2006 Bulletin 2006/34**

(51) Int Cl.:
*F16C 33/66* (2006.01)    *F16C 33/58* (2006.01)
*F16C 19/36* (2006.01)    *F16C 19/06* (2006.01)
*F16C 33/76* (2006.01)

(21) Application number: **04818218.2**

(22) Date of filing: **08.11.2004**

(86) International application number:
**PCT/JP2004/016539**

(87) International publication number:
**WO 2005/045269 (19.05.2005 Gazette 2005/20)**

(84) Designated Contracting States:
**DE FR GB IT**

(30) Priority: **07.11.2003 JP 2003378354**
**05.10.2004 JP 2004292295**

(71) Applicant: **JTEKT Corporation**
**Osaka-shi**
**Osaka**
**542-8502 (JP)**

(72) Inventors:
• **MATSUYAMA, Hiroki,**
**c/o JTEKT Corporation**
**Osaka-shi, Osaka 5420081 (JP)**
• **CHIBA, Hiroyuki,**
**c/o JTEKT Corporation**
**Osaka-shi, Osaka 5420081 (JP)**

• **KITAMURA, Kazuhisa,**
**c/o JTEKT Corporation**
**Osaka-shi, Osaka 5420081 (JP)**
• **YAMAKAWA, Kazuyoshi,**
**c/o JTEKT Corporation**
**Osaka-shi, Osaka 5420081 (JP)**
• **FUKUDA, Toshirou,**
**c/o JTEKT Corporation**
**Osaka-shi, Osaka 5420081 (JP)**
• **DODORO, Hirofumi,**
**c/o JTEKT Corporation**
**Osaka-shi, Osaka 5420081 (JP)**
• **TODA, Kazutoshi,**
**c/o JTEKT Corporation**
**Osaka-shi, Osaka 5420081 (JP)**

(74) Representative: **HOFFMANN EITLE**
**Patent- und Rechtsanwälte**
**Arabellastrasse 4**
**81925 München (DE)**

(54) **OIL LUBRICATION-TYPE ROLLING BEARING DEVICE**

(57)    A tapered roller bearing device has an inner ring 1, an outer ring 2, tapered rollers 3, a retainer 5 and a shield plate 6. The inner ring 1 has a flange portion 1a brought in contact with minor diameter end surfaces of the tapered rollers 3. The shield plate 6 is placed brought in contact with an end surface of the flange portion 1a of the inner ring 1. The shield plate 6 has a protrusion 9 that protrudes radially outwardly of the flange portion 1a. The protrusion 9 is placed in a place having an interval from the retainer 5 in an axial direction of the inner ring 1.

*Fig.1*

**EP 1 693 584 A1**

**Description**

BACKGROUND OF THE INVENTION

The present invention relates to oil lubricated rolling bearing devices and relates, in particular, to an oil lubricated rolling bearing device suitable for use in a pinion axle bearing device, such as differential gears, trans-axles and so on of automobiles, and transmissions and so on of automobiles.

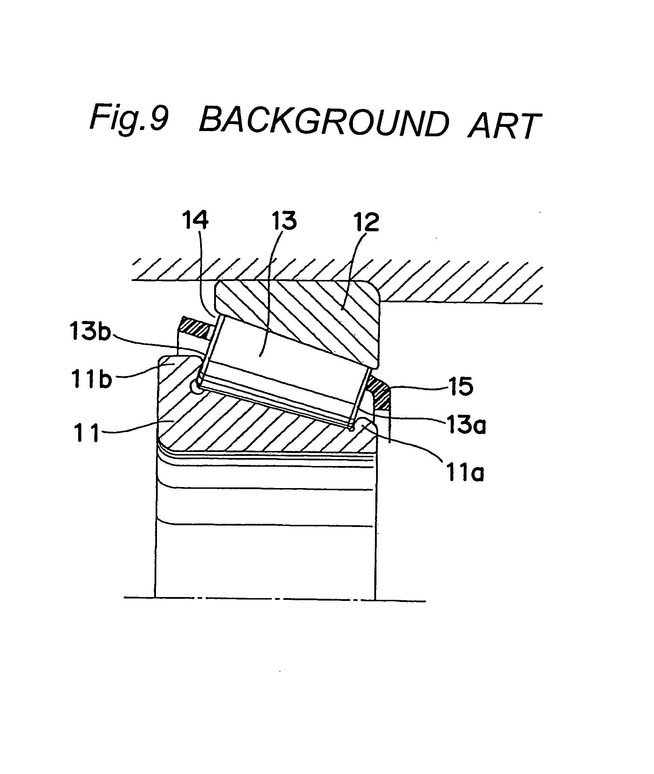

Conventionally, there has been a tapered roller bearing shown in Fig. 9 as an oil lubricated rolling bearing device. The tapered roller bearing is used in automobiles and machine tools.

As shown in Fig. 9, the tapered roller bearing is constructed of an inner ring 11, an outer ring 12, tapered rollers 13 that are rollably placed in an annular space 14 located between the inner ring 11 and the outer ring 12, and a retainer 15 that retains the tapered rollers 13 at prescribed intervals in the circumferential direction.

The tapered roller bearing supports a radial load and a thrust load, i.e., loads from the radial direction and the thrust direction. The tapered roller bearing has a problem that its rotating torque is large, though it can support the loads from the radial direction and the thrust direction. For the above reasons, it is often the case where a ball bearing is used in an application that requires a low torque.

However, the ball bearing, which has a small load capacity in comparison with the tapered roller bearing, is required to have an increased bearing size in order to obtain the same load capacity, and the weight is increased. Therefore, it is preferable to use the tapered roller bearing as far as possible in a portion that receives a large load.

As a factor of the rotating torque of the tapered roller bearing, sliding friction resistance of a flange portion 11a formed at an end portion on the minor diameter side of the tapered raceway surface of the inner ring 11 and a flange portion 11b formed at an end portion on the major diameter side of the tapered raceway surface to end surfaces 13a and 13b of the tapered rollers 13 can be enumerated.

Moreover, as another factor of the rotating torque, there is oil agitating resistance attributed to the use of the tapered roller bearing in the differential unit of an automobile, a machine tool or the like, i.e., the use of the bearing on the condition that lubrication is achieved by making a large amount of oil inflow.

As a tapered roller bearing that can reduce the oil agitating resistance, there is a tapered roller bearing described in JP 2004-084799 A.

In the tapered roller bearing, the radial thickness of strut portions of the retainer is increased roughly entirely in the circumferential direction. By thus narrowing the passage of lubricating oil between the inner surface of the retainer and the outer surface of the inner ring, the amount of lubricating oil that flows into the bearing is reduced.

However, since the retainer that has the strut portions of the increased thickness is to rotate at high speed between the inner ring and the outer ring in the tapered roller bearing, there is a problem that the reduction in oil agitating resistance is insufficient depending on use conditions.

As described above, the tapered roller bearing has the defect that the rotating torque is high though it has the advantage of high capacity. In particular, when lubrication is provided by a large amount of oil, there is a problem that the reduction in rotating torque is insufficient due to agitation resistance. If the rotating torque can largely be reduced, the efficiencies of machine and devices can remarkably be improved. Moreover, an energy reduction can be achieved, which is also useful for an improvement in the environmental load.

In view of the situations, there is a growing demand for reducing the rotating torque attributed to the agitation resistance of lubricating oil.

SUMMARY OF THE INVENTION

An object of the present invention is to provide an oil lubricated rolling bearing device capable of reducing rotating torque by reducing agitation resistance with the load capacity secured.

In order to solve the problems, there is provided an oil lubricated rolling bearing device comprising:

an inner ring;
an outer ring;
a plurality of rolling elements placed between the inner ring and the outer ring; and
an oil inflow suppression member that suppresses oil inflow between the inner ring and the outer ring.

According to the present invention, the amount of oil that enters the inside of the bearing device can be suppressed by the oil flow suppression member. Therefore, the oil does not excessively enter the inside of the oil lubricated rolling bearing device, and the oil agitating resistance can be reduced. Therefore, the rotating torque of the oil lubricated rolling bearing device itself can be reduced. Therefore, the fuel consumption of the automobile or the like that has the oil lubricated rolling bearing device of the present invention can be reduced.

In one embodiment, the rolling elements are tapered rollers,
the inner ring is a rotating ring that has a tapered raceway surface, and the outer ring is a fixed ring that has a tapered raceway surface,
the inner ring has a flange portion brought in contact with minor diameter end surfaces of the tapered rollers,
the oil inflow suppression member is a shield plate having a protrusion that protrudes radially outwardly of the flange portion,
the device further comprises a retainer that retains the tapered rollers, and
the protrusion is placed in a place having an interval from the retainer in an axial direction of the inner ring.

When a member is provided on an inner ring side being a rotating ring, the member is to rotate with the rotating shaft. It is considered undesirable to provide such a member that rotates with the rotating shaft among those skilled in the art. Therefore, the idea of preventing oil from flowing into the bearing by providing a shield plate on the inner ring, i.e., the rotating ring has not existed among those skilled in the art. However, the present inventor discovered that the rotating torque could be remarkably reduced in comparison with the conventional tapered roller when the shield plate is provided on the inner ring side of the rotating ring through experiments.

According to the embodiment, the rotating torque can remarkably be reduced in comparison with the conventional tapered roller. This is presumably ascribed to the fact that, because of the structure in which the shield plate is placed on the inner ring, i.e., the rotating ring, and the shield plate rotates, the oil is splashed radially outwardly by the centrifugal force of the oil that adheres to the shield plate, making it difficult for the oil to enter the inside of the bearing device.

In one embodiment, the protrusion has an outside diameter that is not greater than an inside diameter of an end portion on a minor diameter side of the tapered raceway surface of the outer ring.

According to the embodiment, the inflow of oil necessary for the lubrication of the bearing device can be secured, and therefore, the seizure of the bearing device can be prevented.

In one embodiment, a gap in the axial direction between the protrusion and the retainer is not greater than 3 mm.

According to the embodiment, the oil that enters the inside of the bearing device can further be reduced, and the rotating torque can further be reduced.

In one embodiment, the inner ring and the shield plate are integrally formed.

According to the embodiment, the number of processing steps and the number of assembling steps can be reduced.

In one embodiment, the rolling elements are tapered rollers,
the inner ring is a rotating ring that has a tapered raceway surface, and the outer ring is a fixed ring that has a tapered raceway surface,
the oil inflow suppression member is a shield plate having a protrusion that protrudes radially inwardly of an end portion on a minor diameter side of the tapered raceway surface of the outer ring,
the device further comprises a retainer that retains the tapered rollers,
the protrusion is placed in a place having an interval from the retainer in an axial direction of the outer ring, and
a gap in the axial direction between the protrusion and the retainer is not greater than 3 mm.

According to the embodiment, the oil that enters the inside of the bearing device can be reduced, and the rotating torque can be reduced.

In one embodiment, the outer ring and the shield plate are integrally formed.

According to the embodiment, the number of processing steps and the number of assembling steps can be reduced.

One embodiment comprises an oil outflow promotion structure for promoting outflow of oil that enters between the inner ring and the outer ring.

According to the embodiment, by virtue of the provision of the oil outflow promotion structure, the oil that has entered the inside of the bearing device can be made to promptly outflow outwardly of the bearing device. Therefore, the oil does not stay inside the oil lubricated rolling bearing device, and the oil smoothly outflows. Therefore, the oil agitating resistance can be reduced, and the torque of the oil lubricated rolling bearing device itself can be reduced. Therefore, the fuel consumption of the automobile or the like provided with the oil lubricated rolling bearing device of the present invention can be reduced.

In one embodiment, the rolling elements are tapered rollers, and
assuming that a number of the tapered rollers is z, a mean diameter of the tapered rollers is DW and a pitch circle diameter of the tapered rollers is dm,
the device comprises an arrangement structure in which the z tapered rollers that satisfies the following expression:

$$z \leq 0.85/(DW(\pi \cdot dm))$$

are arranged between the inner ring and the outer ring with a major diameter side of the tapered rollers facing toward an oil outflow side.

According to the embodiment, by suppressing the number z of the tapered rollers to $0.85/(DW/(\pi \cdot dm))$ or less and enlarging the space between the tapered rollers that adjoin in the circumferential direction, the oil passage is enlarged, and therefore, the outflow of oil can be promoted. Therefore, the amount of oil inside the oil lubricated type roller bearing can be reduced, and the oil agitating resistance can be reduced.

In detail, according to the embodiment, the number z of the tapered rollers is set not greater than $0.85/(DW/(\pi \cdot dm))$, the passage through which the oil that penetrates the inside of the bearing can be expanded and the oil that enters the inside of the bearing can be made easy to flow outwardly in comparison with the normal tapered roller bearing in which the number z of the tapered rollers is set within a range of $0.90/(DW/(\pi \cdot dm))$ to $0.95/(DW/(\pi \cdot dm))$. Accordingly, the amount of oil that contributes to the oil agitating resistance is reduced, and therefore, the torque attributed to the agitation resistance can be reduced by 10% or more.

In one embodiment, the rolling elements are tapered rollers, and the oil outflow promotion structure comprises the tapered raceway surface of the outer ring set in contact with the tapered rollers at a contact angle of not smaller than 25°.

In the present specification, the contact angle is defined as the complementary angle of the angle made between the normal line of the taper surface and the axial center line of the oil lubricated rolling bearing device (90° - the angle).

According to the embodiment, the degree of widening of the tapered raceway surface of the outer ring in the direction in which the oil outflows is increased by setting the contact angle of not smaller than 25°. Therefore, the speed of the oil that has reached the tapered raceway surface of the outer ring due to the centrifugal force during the operation of the bearing device and moves along the tapered raceway surface can be increased. Therefore, the oil can be made to efficiently outflow, and the degree of the reduction in the torque of the oil lubricated rolling bearing device itself can be increased.

In detail, according to the embodiment, since the contact angle is set not smaller than 25°, the discharging capability of oil in the bearing flowing toward the outer ring side due to the centrifugal force can be improved, and the torque attributed to the agitation resistance can be reduced by 20% or more in comparison with the normal bearing in which the contact angle is set to about 20°.

In one embodiment, the oil inflow suppression member comprises a member that partially blocks an opening located between the inner ring and the outer ring on an oil inflow side, and the oil outflow promotion structure comprises a member that extends along an oil outflow direction on an oil outflow side.

In the present specification, the oil outflow side is defined as the downstream side of the oil flow with respect to a plane, which extends through the center of the rolling element (on the central axis of the tapered roller and at a midpoint between the roller large end face and the roller small end face in the case where the rolling element is the tapered roller) and is perpendicular to the central axis of the outer ring. Moreover, the oil inflow side is defined as the upstream side of the oil flow with respect to the plane.

According to the embodiment, the oil inflow suppression member includes the member that extends so as to block the opening on the oil inflow side, and therefore, oil other than the necessary minimum oil can reliably be suppressed from entering the inside of the oil lubricated rolling bearing device from the opening. Moreover, the oil outflow promotion structure includes the member that extends along the oil outflow direction on the oil outflow side, and therefore, the oil flow can be rectified by the oil outflow promotion structure, and the oil can be made to efficiently outflow.

In one embodiment, at least one of an end surface on the major diameter side of the tapered rollers and an end surface of a flange portion that is provided on a major diameter side of a tapered raceway surface of the inner ring and brought in contact with the end surface on the major diameter side of the tapered rollers is coated with a hard coating.

According to the embodiment, at least one of the end surface on the major diameter side of the tapered roller and the end surface of the flange portion is coated with the hard coating, and therefore, the torque can further be reduced by reducing a friction between the end surface on the major diameter side of the tapered roller and the end surface of the flange portion. In addition, even if the supplied oil becomes very small, a seizure at the contact portion between the end surface on the major diameter side of the tapered roller and the end surface of the flange portion (contact portions of them) can reliably be prevented.

In one embodiment, the rolling elements are balls, and the oil outflow promotion structure includes a portion of a shape that widens toward an oil outflow side in cross section on an inner peripheral surface of the outer ring.

According to the embodiment, the speed of the oil that has reached the inner surface of the outer ring due to the centrifugal force during the operation of the oil lubricated rolling bearing device and moves along the inner peripheral surface of the outer ring can be increased. Therefore, the oil can be made to efficiently outflow, and the degree of the reduction in the torque of the oil lubricated rolling bearing device can be increased.

In one embodiment, at least one of the raceway surfaces of the inner ring and the outer ring and the balls is coated with a hard coating.

According to the embodiment, the torque can be reduced by reducing a friction force between the raceway surfaces of the inner ring and the outer ring and the balls. Moreover, even if the supplied oil becomes very small, a seizure between the balls and the two raceway surfaces (contact portions of them) can reliably be prevented.

According to the present invention, the amount of oil that enters the inside of the bearing device can be suppressed by the oil inflow suppression member. Therefore, the oil does not excessively enter the inside of the oil lubricated rolling bearing device, and the oil agitating resistance can be reduced. Therefore, the torque of the oil lubricated rolling bearing device itself can be reduced. Therefore, the fuel consumption of the automobile or the like provided with the oil lubricated rolling bearing device of the present invention can be reduced.

BRIEF DESCRIPTION OF THE DRAWINGS

Fig. 1 is an axial sectional view of a tapered roller bearing device according to a first embodiment of the oil lubricated rolling bearing device of the present invention;
Fig. 2 is an axial sectional view of a tapered roller bearing device according to a second embodiment of the oil lubricated rolling bearing device of the present invention;
Fig. 3 is an axial sectional view of a tapered roller bearing device according to a third embodiment of the oil lubricated rolling bearing device of the present invention;
Fig. 4 is an axial sectional view of a tapered roller bearing device according to a fourth embodiment of the oil lubricated rolling bearing device of the present invention;
Figs. 5A, 5B and 5C are views showing three tapered roller bearing devices used for tests to investigate the operative effects of the tapered roller bearing device of the first embodiment;
Figs. 6A, 6B and 6C are views showing three tapered roller bearing devices used for tests to investigate the operative effects of the tapered roller bearing device of the third embodiment;
Fig. 7 is a graph showing the results of the torque test of the three tapered roller bearing devices shown in Figs. 5A through 5C;
Fig. 8 is a graph showing the results of the torque test of the three tapered roller bearing devices shown in Figs. 6A through 6C;
Fig. 9 is a view showing a conventional oil lubricated type rolling bearing;
Fig. 10 is an axial sectional view of a tapered roller bearing device according to a fifth embodiment of the oil lubricated rolling bearing device of the present invention;
Fig. 11 is a view showing the structure of a differential;
Figs. 12A, 12B, 12C and 12D are views showing the tapered roller bearing devices used to investigate the torque reducing effect and the oil flow rate reducing effect;
Figs. 13A and 13B are graphs showing the relations between the torque and the rotational frequency of the four tapered roller bearing devices and the tapered roller bearing;
Figs. 14A and 14B are graphs showing the relations between the oil flow rate and the rotational frequency of the four tapered roller bearing devices and the tapered roller bearing;
Fig. 15 is an axial sectional view of a ball bearing device according to a seventh embodiment of the oil lubricated rolling bearing device of the present invention;
Fig. 16 is a graph showing the relations between the rotational speed and the frictional torque in the ball bearing device of the seventh embodiment and a conventional ball bearing when a gear oil is set to 50 degrees; and
Fig. 17 is a view showing a testing machine used for tests to investigate the operative effects of the tapered roller bearing devices.

REFERENCE NUMERALS

1, 101, 120, 151: inner ring
2, 102, 121, 152: outer ring
2a: large end portion of outer ring
3, 103, 123: tapered roller
4: annular space
5, 104, 157: retainer
6: shield plate
7: shield plate

8: casing

9, 10: protrusion

107: portion located on the minor diameter side of tapered rollers in retainer

108: portion located on the major diameter side of tapered rollers in retainer

109: end surface of flange portion located on the major diameter side of inner ring

110: end surface on the major diameter side of tapered rollers

115: tapered raceway surface

116: opening located on the oil inflow side

122, 155: shield plate

153: ball

158: portion located on the oil outflow side of retainer

159: conical surface

θ: contact angle

DETAILED DESCRIPTION OF THE INVENTION

Embodiments of the present invention will be described below.

(FIRST EMBODIMENT)

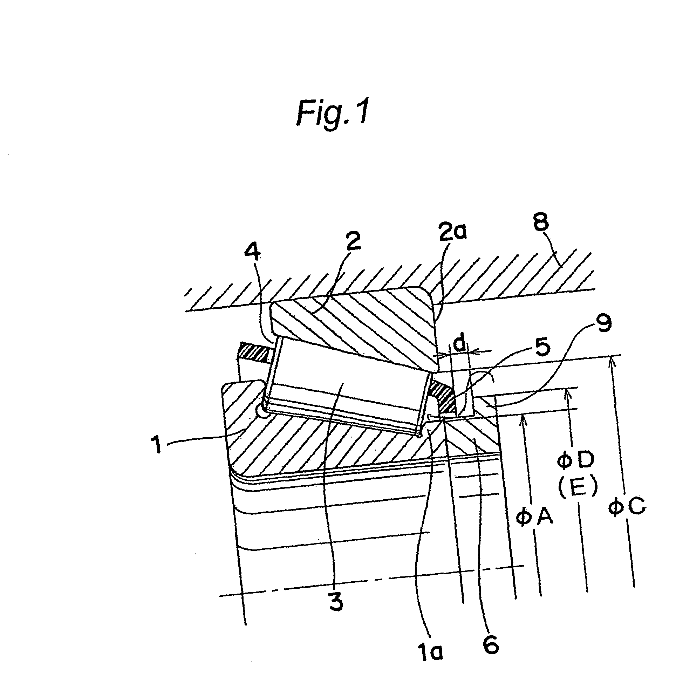

Fig. 1 is an axial sectional view of a tapered roller bearing device that is an oil lubricated rolling bearing device of a first embodiment of the present invention.

The tapered roller bearing device is used for a pinion axle support of a pinion axle bearing device such as a differential gear and a trans-axle device of an automobile, for example.

The tapered roller bearing device is comprised of an inner ring 1, an outer ring 2, tapered rollers 3 arranged at regular intervals in the circumferential direction in an annular space 4 located between the inner ring 1 and the outer ring 2, a retainer 5 that retains the tapered rollers 3 and a shield plate 6 as one example of an oil inflow suppression member (attachment).

The inner ring 1 is a rotating ring that has a tapered raceway surface, and the outer ring 2 is a fixed ring that has a tapered raceway surface. The inner ring 1 has a flange portion 1a brought in contact with minor diameter end surfaces of the tapered rollers 3 at a minor diameter end portion of the tapered raceway surface thereof and has a flange portion brought in contact with major diameter end surfaces of the tapered rollers 3 at a major diameter end portion of the tapered raceway surface thereof. The tapered roller bearing device is used on the condition that oil enters from an opening located on the flange portion 1a side of the inner ring 1.

The shield plate 6 is placed for the purpose of limiting the inflow of oil. The shield plate 6 is fixed directly (or indirectly via a member) to a rotating shaft such that it is brought in contact with the end surface of the flange portion 1a on the minor diameter side of the tapered raceway surface of the inner ring 1. The shield plate 6 can rotate with the rotating shaft. The shield plate 6 has a protrusion 9 that protrudes radially outwardly of the flange portion 1a of the inner ring 1. The protrusion 9 is not greater than an inside diameter of an end portion on the minor diameter side of the tapered raceway surface of the outer ring 2. It is noted that the shield plate 6 is placed so as to be brought in contact with the end surface of the flange portion 1a on the minor diameter side of the tapered raceway surface of the inner ring 1 in the tapered roller bearing device of the first embodiment. However, in the present invention, a gap may exist in the axial direction of the inner ring 1 between the shield plate 6 and the end surface of the flange portion 1a on the minor diameter side of the tapered raceway surface of the inner ring 1, and the shield plate 6 may not be in contact with the end surface of the flange portion 1a on the minor diameter side of the tapered raceway surface of the inner ring 1. Moreover, a member may be arranged between the shield plate 6 and the end surface of the flange portion 1a on the minor diameter side of the tapered raceway surface of the inner ring 1.

In other words, the outside diameter D of the protrusion 9 has a dimension that is not smaller than the outside diameter A of the flange portion 1a on the small end side of the inner ring 1. Moreover, the protrusion 9 is placed in a place having an interval (gap) d from the retainer 5 outwardly in the axial direction of the inner ring 1.

When the dimension is designed different from that of the first embodiment, i.e., when the outside diameter D of the shield plate 6 is designed to be smaller than the outside diameter A of the flange portion 1a on the small end side of the inner ring 1 so that "D < A", the inflow of the lubricating oil cannot be suppressed, and the effect of reducing the rotating torque becomes small.

Moreover, when the gap d is "d > 3 mm" regardless of the outside diameter dimension of the shield plate 6, the effect of suppressing the inflow of the lubricating oil is small, and the effect of reducing the rotating torque becomes small.

According to the tapered roller bearing device of the first embodiment, the outside diameter D of the protrusion 9 of the shield plate 6 is made not smaller than the outside diameter A of the flange portion 1a on the small end side of the inner ring 1 and made not greater than the inside diameter C of the inner peripheral end portion of the large end portion 2a of the outer ring 2 (not greater than the inside diameter C at the end portion on the minor diameter side of the tapered raceway surface of the outer ring 2), and the protrusion 9 is placed at a prescribed interval from the end portion of the retainer 5 outwardly in the axial direction of the inner ring 1. Therefore, the intrusion of the lubricating oil can be limited, and the agitation resistance can remarkably be reduced. When the protrusion is placed outwardly of the end portion of the retainer in the axial direction, the effect is particularly remarkable.

When the dimension is designed different from that of the first embodiment, i.e., when the outside diameter D of the shield plate 6 is set smaller than the outside diameter A of the flange portion 1a on the small end side of the inner ring 1 so that "D < A", the effect of suppressing the inflow of the lubricating oil becomes small, and the effect of reducing the rotating torque also becomes small. Moreover, when the outside diameter D becomes greater than the inside diameter C of the inner peripheral end portion of the large end portion 2a of the outer ring 2 so that "D > C", the lubricating oil scarcely enters the inside of the tapered roller bearing device. Therefore, lubrication between the raceway rings (inner ring 1 and outer ring 2) and the tapered rollers 3 becomes insufficient, and the contact surface possibly suffers damages or seizes up.

Moreover, when the gap d is "d > 3 mm" regardless of the dimension of the outside diameter D of the shield plate 6, the effect of suppressing the inflow of the lubricating oil becomes small, and the effect of reducing the rotating torque also becomes small.

Although the protrusion 9 is an axially outside portion of the shield plate 6 in the tapered roller bearing device of the first embodiment, it is acceptable that the protrusion is a portion other than the axially outside portion of the shield plate in the present invention. Moreover, although the protrusion extends roughly straight radially outwardly in the tapered roller bearing of the first embodiment, the protrusion may extend aslant roughly radially outwardly in the present invention.

(SECOND EMBODIMENT)

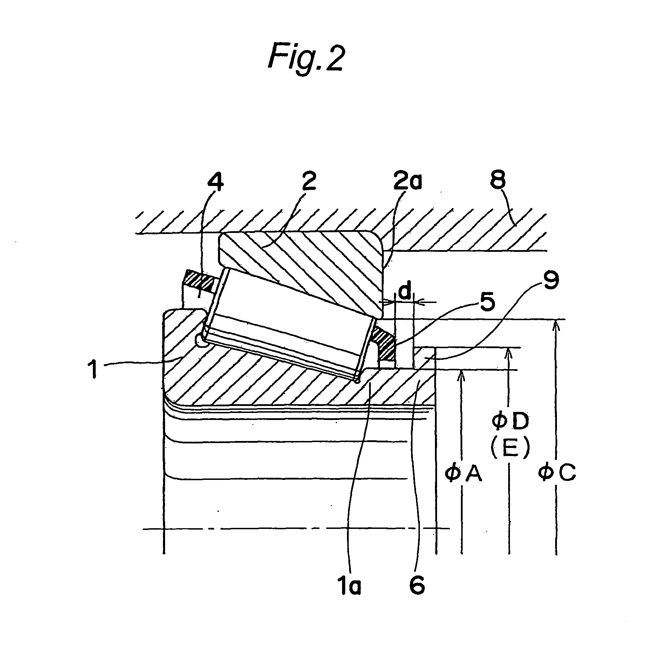

Fig. 2 is an axial sectional view of a tapered roller bearing device of a second embodiment of the oil lubricated rolling bearing device of the present invention.

Although the shield plate 6 separated from the inner ring 1 is arranged on the small end side (flange portion 1a side) of the inner ring 1 in the tapered roller bearing device of the first embodiment, a tapered roller bearing device of the second embodiment differs from the tapered roller bearing device of the first embodiment only in that the flange portion 1a located on the minor diameter side of the tapered raceway surface of the inner ring 1 and the shield plate 6 are integrally formed as shown in Fig. 2. With regard to the tapered roller bearing device of the second embodiment, no description is provided for the same as parts of the tapered roller bearing device of the first embodiment.

In the tapered roller bearing device of the second embodiment, the protrusion 9 protrudes radially outwardly of the flange portion 1a of the inner ring 1 as in the first embodiment. Moreover, the protrusion 9 is placed so as to have a gap d apart from the end portion of the retainer 5 outwardly in the axial direction of the inner ring 1.

Because the inner ring 1 and the shield plate 6 are integrally formed in the tapered roller bearing device of the second embodiment, the rotating torque due to the agitation resistance can be reduced, and the number of processing steps and the number of assembling steps can also be reduced.

(THIRD EMBODIMENT)

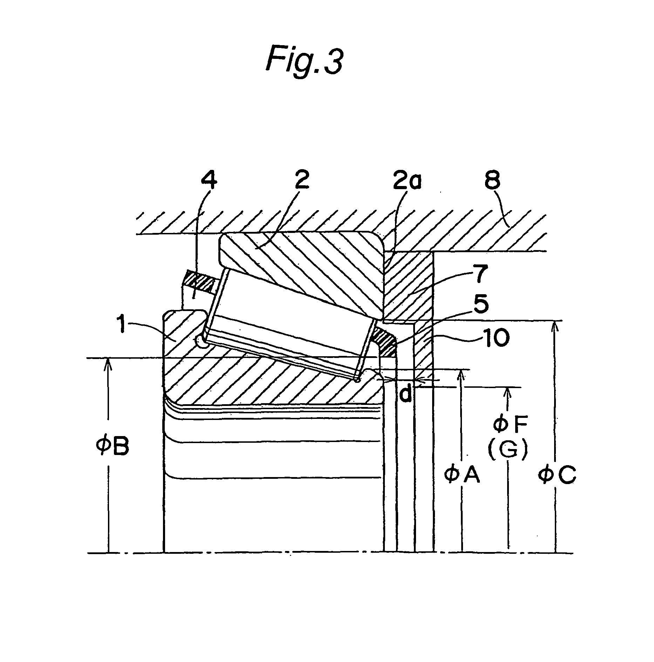

Fig. 3 is an axial sectional view of a tapered roller bearing device of a third embodiment of an oil lubricated rolling bearing device of the present invention.

The basic construction of the tapered roller bearing device of the third embodiment is similar to the basic construction of the tapered roller bearing device of the first embodiment. In the tapered roller bearing device of the third embodiment, a shield plate 7 as one example of the oil inflow suppression member (attachment) is fixed to a casing 8 to which an outer ring 2 is fixed.

In detail, the shield plate 7 is fixed to the casing 8 such that it abuts against the end surface on a minor diameter side of a tapered raceway surface of the outer ring 2. The shield plate 7 has a protrusion 10 that protrudes radially inwardly of the end portion on the minor diameter side of the tapered raceway surface of the outer ring 2. In other words, the inside diameter F of the protrusion 10 is set not greater than the inside diameter C of the inner peripheral end portion of the large end portion 2a of the outer ring 2. Moreover, the protrusion 10 is placed in a place having an interval from the retainer 5 in the axial direction of the outer ring 1. A gap d in the axial direction between the protrusion 10 and the retainer 5 is set not greater than 3 mm. In the tapered roller bearing device of the third embodiment, the shield plate 7 is fixed to the casing 8 in such a manner that it abuts against the end surface of an end portion on the minor diameter side of the tapered raceway surface of the outer ring 2. However, in the present invention, a gap may exist in the axial direction of the outer ring 2 between the shield plate 7 and the end surface of the end portion on the minor diameter side of the tapered raceway surface of the outer ring 2, and the shield plate 7 may not abut against the end surface of the end portion on the minor diameter side of the tapered raceway surface of the outer ring 2. Moreover, a member may be placed between the shield plate 7 and the end surface of the end portion on the minor diameter side of the tapered raceway surface of the outer ring 2.

When the dimension is different from that of the third embodiment, i.e., when the dimension is designed so that the inside diameter F of the shield plate 7 becomes greater than the inside diameter C of the inside diameter end portion of the increased width portion 2a of the outer ring 2 satisfying "F > C", the effect of suppressing the inflow of the lubricating oil becomes small, and the effect of reducing the rotating torque also becomes small. Moreover, when the gap d is "d > 3 mm" regardless of the inside diameter dimension of the shield plate 7, the effect of suppressing the inflow of the lubricating oil is insufficient, and the effect of reducing the rotating torque becomes small. It is preferred that A ≤ F ≤ B in order to make the rotating torque reduction and the lubricant securing compatible.

(FOURTH EMBODIMENT)

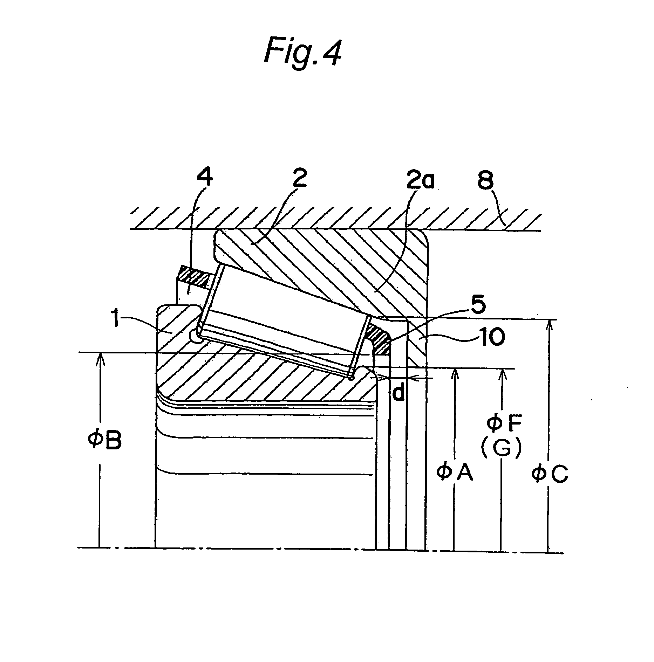

Fig. 4 is an axial sectional view of a tapered roller bearing device of a fourth embodiment of an oil lubricated rolling bearing device of the present invention.

In the tapered roller bearing device of the third embodiment, the shield plate 7 separated from the outer ring 2 has been fixed to the casing 8 to which the outer ring 2 is fixed. However, as shown in Fig. 4, it is acceptable to integrally form the large end portion 2a of the outer ring 2 with the shield plate 7 and place the protrusion 10 in a place having an interval d of not greater than 3 mm from the retainer 5 in the axial direction of the outer ring 1.

According to the tapered roller bearing device of the fourth embodiment, the rotating torque due to the agitation resistance can be reduced and the number of processing steps and the number of assembling steps can also be reduced as in the tapered roller bearing device of the second embodiment.

The arrangement produces a more remarkable torque reducing effect in a case where a great amount of oil of a comparatively high viscosity enters the inside of the bearing and the agitation resistance is increased as in the case where it is used for a pinion axle support of a pinion axle bearing device such as a differential gear unit and a trans-axle unit of an automobile.

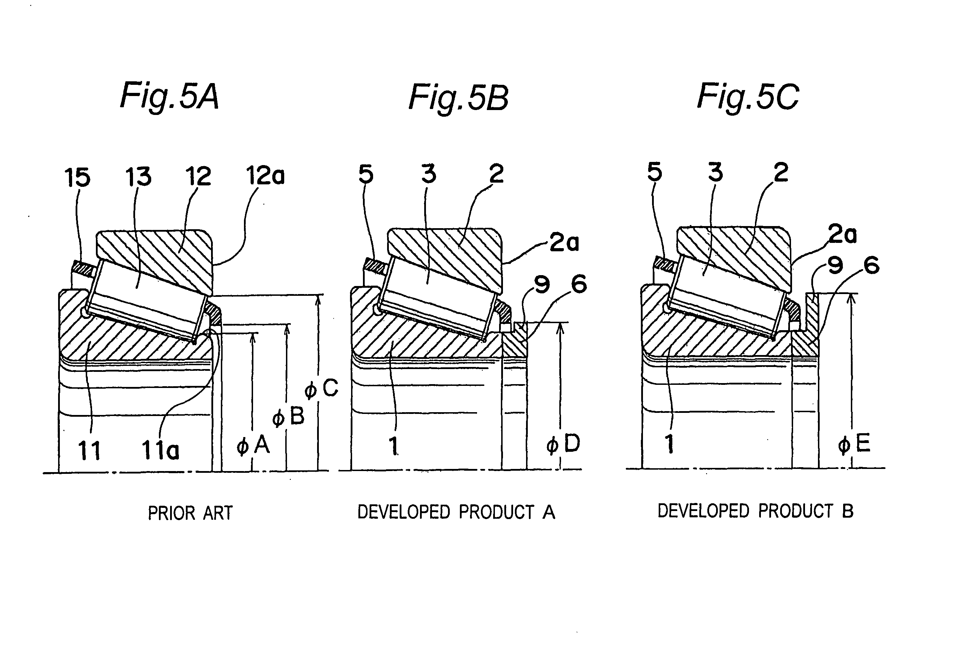

Figs. 5A through 5C are views showing three tapered roller bearing devices used for tests to investigate the operative effects of the tapered roller bearing device of the first embodiment.

In detail, the tapered roller bearing device shown in Fig. 5A is a conventional tapered roller bearing. The tapered roller bearing shown in Fig. 5B is a tapered roller bearing device of a newly developed product A. The tapered roller bearing shown in Fig. 5C is a tapered roller bearing device of a newly developed product B.

The dimensional ratios of the objects to be tested are set as follows.

That is, as shown in Fig. 5A, the outside diameter of the flange portion 11a of the inner ring 11 on the lubricating oil inflow side of the conventional tapered roller bearing, i.e., the flange portion 11a on the minor diameter side of the tapered raceway surface of the inner ring 11 was set to $\phi$A, the inside diameter of the retainer 15 was set to $\phi$B, and the inside diameter of the inner peripheral surface end portion of the large end portion 12a of the outer ring 12 was set to $\phi$C.

Moreover, in the tapered roller bearing device of the newly developed product A, the outside diameter dimension $\phi$D of the protrusion 9 of the shield plate 6 was set so that $\phi$D = $\phi$B, and the interval d between the protrusion 6 and the retainer 5 in the axial direction of the inner ring 1 was set so that d = 0.1 mm.

Moreover, in the tapered roller bearing device of the newly developed product B, the outside diameter dimension $\phi$E of the protrusion 9 of the shield plate 6 was set so that $\phi$E = $\phi$C, and the interval d between the protrusion 6 and the retainer 5 in the axial direction of the inner ring 1 was set so that d = 0.1 mm.

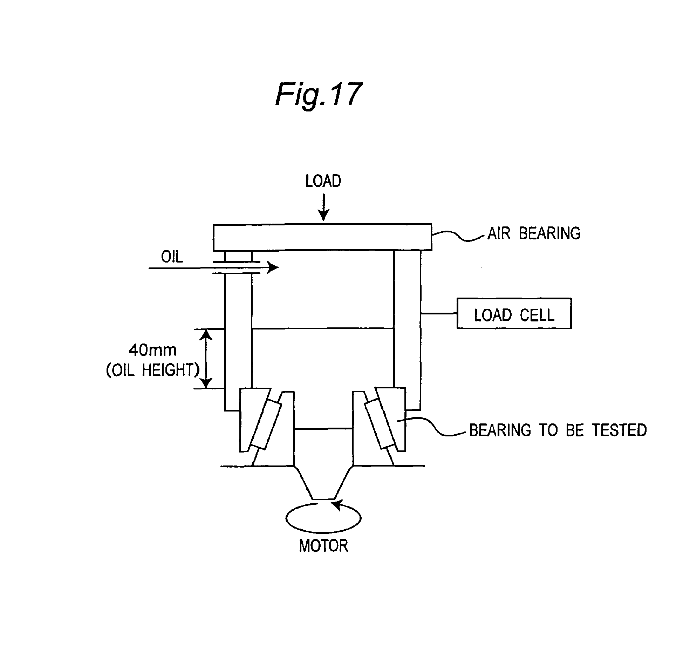

Fig. 17 is a view showing a testing machine. The testing machine is a vertical type torque measuring device. As shown in Fig. 17, in the vertical type torque measuring device, the inner ring of the tapered roller bearing device to be tested (indicated as bearing to be tested in Fig. 17) is rotated. Moreover, the vertical type torque measuring device fixes the outer ring large end face facing upward. Moreover, the following conditions are adopted as test conditions.

 Axial load: 4 kN (kilonewton)
 Lubricant: gear oil 85W-90
 Rotational frequency: 2000 r/min
 Supplied lubricating oil temperature: 50°C

Amount of supplied oil: Supplied so that the oil-level height becomes 40 mm above the upper surface of the bearing.

Then, each of the three tapered roller bearing devices of which the structures have been described in detail above was operated on the conditions described above, and the torque was measured with each of the three tapered roller bearing devices.

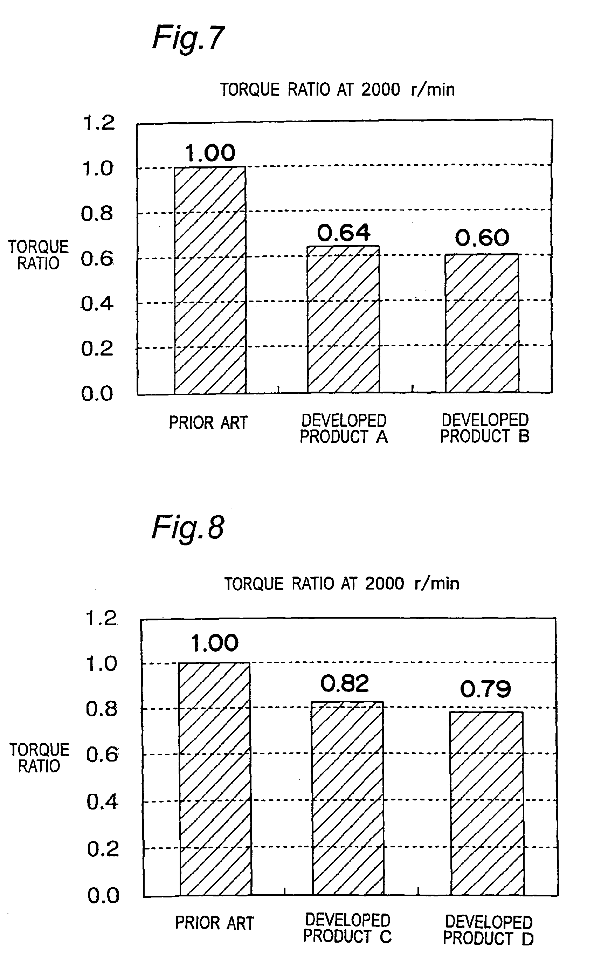

Fig. 7 is a graph showing the test results.

As shown in Fig. 7, when the outside diameter D of the protrusion 9 of the shield plate 6 is set not smaller than the outside diameter A of the flange portion 1a on the minor diameter side of the tapered raceway surface of the inner ring 1 and set not greater than the inside diameter C of the inner peripheral end portion of the large end portion 2a on the minor diameter side of the tapered raceway surface of the outer ring 2, and the gap in the axial direction between the protrusion 9 and the retainer 5 is set not greater than 3 mm, the rotating torque can largely be reduced to 60% to 64% of the rotating torque of the conventional tapered roller bearing. In other words, the rotating torque can be reduced by 36% to 40%.

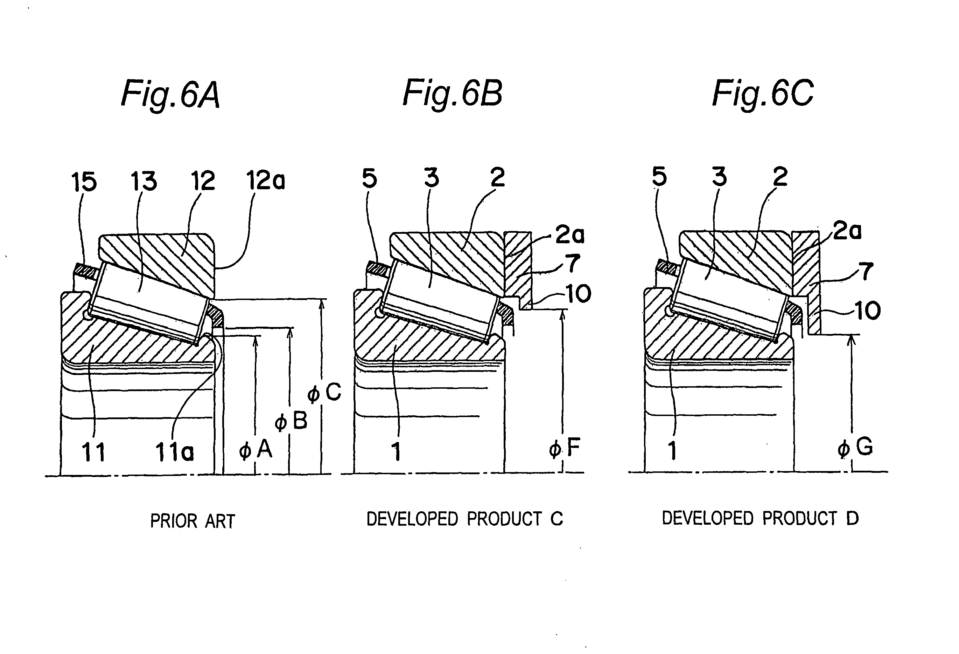

Figs. 6A through 6C are views showing three tapered roller bearing devices used for tests to investigate the operative effects of the tapered roller bearing device of the third embodiment.

In detail, the tapered roller bearing device shown in Fig. 6A is a conventional tapered roller bearing. The tapered roller bearing device shown in Fig. 6B is a tapered roller bearing device of a newly developed product C. The tapered roller bearing device shown in Fig. 6C is a tapered roller bearing device of a newly developed product D.

The dimensional ratios of the objects to be tested are set as follows.

That is, as shown in Fig. 6A, the outside diameter of the flange portion 11a of the inner ring 11 on the lubricating oil inflow side of the conventional tapered roller bearing, i.e., the flange portion 11a on the minor diameter side of the tapered raceway surface of the inner ring 11 was set to $\phi A$, the inside diameter of the retainer 15 was set to $\phi B$, and the inside diameter of the inner peripheral surface end portion of the large end portion 12a of the outer ring 12 was set to $\phi C$.

Moreover, in the tapered roller bearing device of the newly developed product C, the inside diameter dimension $\phi F$ of the protrusion 10 of the shield plate 7 was set so that $\phi F = (\phi B + \phi C)/2$, and the interval d between the protrusion 10 and the retainer 5 in the axial direction of the outer ring 2 was set so that d = 0.1 mm.

Moreover, in the tapered roller bearing device of the newly developed product D, the inside diameter dimension $\phi G$ of the protrusion 10 of the shield plate 7 was set so that $\phi G = \phi A$, and the interval d between the protrusion 10 and the retainer 5 in the axial direction of the outer ring 2 was set so that d = 0.1 mm.

Moreover, the vertical type torque measuring device shown in Fig. 17 was used as the testing machine. Then, the tests were conducted on the condition that the inner ring was rotated and the outer ring large end face was fixed facing upward.

Axial load: 4 kN (kilonewton)
Lubricant: gear oil 85W-90
Rotational frequency: 2000 r/min
Supplied lubricating oil temperature: 50°C
Amount of supplied oil: Supplied so that the oil-level height becomes 40 mm above the upper surface of the bearing.
Then, each of the three tapered roller bearing devices of which the structures have been described in detail above was operated on the conditions described above, and the torque was measured with each of the three tapered roller bearing devices.
Fig. 8 is a graph showing the test results.
As shown in Fig. 8, when the inside diameter F of the protrusion 10 of the shield plate 7 is set not greater than the inside diameter C of the inner peripheral surface end portion of the large end portion 2a of the outer ring 2 and set not smaller than the outside diameter A of the flange portion 1a on the minor diameter side of the tapered raceway surface of the inner ring 1, and the gap in the axial direction between the protrusion 10 and the retainer 5 is set not greater than 3 mm, the rotating torque can largely be reduced to 79% to 82% of the rotating torque of the conventional tapered roller bearing. In other words, the rotating torque can be reduced by 18% to 21%.

(FIFTH EMBODIMENT)

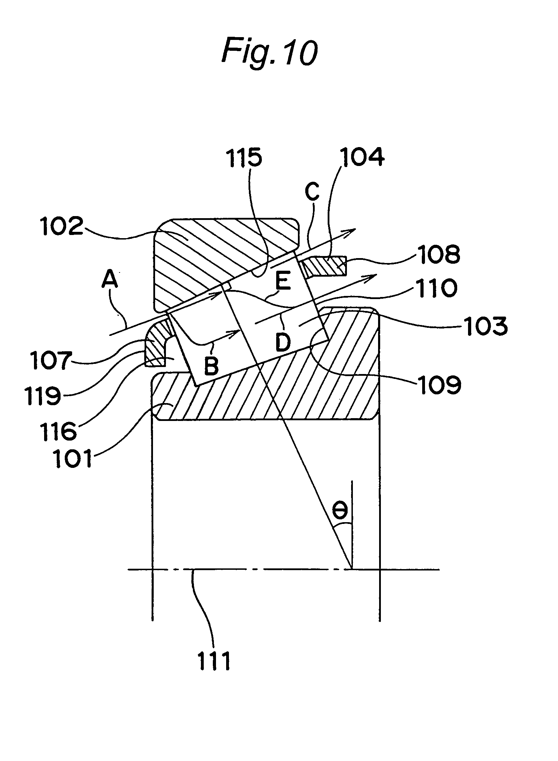

Fig. 10 is an axial sectional view of a tapered roller bearing device of a fifth embodiment of an oil lubricated rolling bearing device of the present invention.

The tapered roller bearing device has an inner ring 101, an outer ring 102 and tapered rollers 103.

A plurality of the tapered rollers 103 are arranged roughly at regular intervals in the circumferential direction in a state in which the tapered rollers 103 are held by a retainer 104 between a tapered raceway surface on the outer peripheral side of the inner ring 101 and a tapered raceway surface 115 on the inner peripheral side of the outer ring 102. The major diameter side of the tapered rollers 103 is directed toward the oil outflow side.

In detail, assuming that the number of the tapered rollers 103 is z, the mean diameter (intermediate diameter between the major diameter side and the minor diameter side of the tapered roller) of the tapered rollers 103 is DW and the pitch circle diameter of the tapered rollers is dm, then the number z of the tapered rollers 103 is set to a number that satisfies the expression $z \leq 0.85/ (DW (\pi \cdot dm))$.

According to experiments, it has been confirmed that the torque sharply increases when the number of the tapered rollers is set to a number greater than 0.85/(DW($\pi \cdot$dm)) and the torque decreases when the number of the tapered rollers is suppressed to 0.85/(DW($\pi \cdot$dm)) or less as described in the fifth embodiment.

The arrangement structure, in which the z tapered rollers 103 wherein the z is limited to a number that satisfies 0.85/(DW($\pi \cdot$dm)) are arranged between the inner ring 101 and the outer ring 102 making the major diameter side of the tapered rollers 103 face toward the oil outflow side and the oil passage is enlarged by reducing the space occupied by the tapered rollers 103 between the inner ring 101 and the outer ring 102, serves as part of an oil outflow promotion structure.

Moreover, a contact angle θ between the tapered raceway surface 115 of the outer ring 102 and the tapered rollers 103, the contact angle being defined by the complementary angle of the angle made between the normal line of a tapered raceway surface 115 of the outer ring 102 and an axial center 111, is set to 25°.

The degree of broadening toward the oil outflow side is large at the contact angle of 25° with respect to the tapered rollers 103, and the tapered raceway surface 115 of the outer ring 102 of which a pumping function to discharge the oil to the outside is great serves as part of the oil outflow promotion structure.

Moreover, a portion 107 located on the minor diameter side of the tapered rollers 103 in the retainer 104 extends in the radial direction that is the direction in which an opening 116 located on the oil inflow side is blocked, from an immediate neighborhood of the tapered raceway surface 115 of the outer ring 102 to a neighborhood of an outer peripheral surface of an end portion of the inner ring 101. Moreover, a portion 108 located on the major diameter side of the tapered rollers 103 in the retainer 104 extends roughly in the axial direction of the tapered rollers 103, or the direction along the oil flow direction from an immediate neighborhood of an end surface 110 on the major diameter side of the tapered rollers 103.

Although not shown, an axial end surface 119 of the portion 107 located on the minor diameter side has a hollow disk-like shape roughly equivalent to the shape of the opening 116, and most of the oil that enters the bearing enters the inside of the bearing by passing through only a slight gap between the portion 107 located on the minor diameter side and the tapered raceway surface 115 of the outer ring 102.

The portion 107 located on the minor diameter side, i.e., the member that extends so as to block the opening 116 serves as an oil inflow suppression member.

Moreover, the portion 108 located on the major diameter side of the tapered rollers 103 in the retainer 104 is configured to a shape roughly parallel to the oil flow and is able to rectify the oil flow. The portion 108 located on the major diameter side serves as part of the oil outflow promotion structure.

Moreover, an end surface 109 located on the tapered roller 103 side of the flange portion located on the major diameter side of the tapered raceway surface of the inner ring 101 is coated with diamond-like carbon (DLC) as one example of hard coating. Also with this arrangement, the seizure can reliably be prevented even if the oil between the sliding surfaces of the end surface 109 and the tapered rollers 103 decreases.

In Fig. 10, arrows A, B, C, D and E indicate the oil flow directions. When the oil enters the inside of the bearing from the direction of arrow A during the high-speed operation of the bearing, the oil is thrown toward neighborhoods of the tapered raceway surface 115 due to a centrifugal force, moves in the direction of arrow C roughly along the tapered raceway surface 115 and outflows from the opening on the oil outflow side of the bearing. Moreover, when the oil enters the inside of the bearing from the direction of arrow A during the low-speed operation of the bearing, the oil outflows to the outside via paths such as a path in which the oil moves in the direction of arrow B radially inwardly and thereafter outflows to the outside along the direction of arrow D roughly parallel to the axial direction of the tapered rollers 3 and a path in which the oil moves along the conical surface 15 to some extent, thereafter moves in the direction of arrow E radially inwardly and thereafter outflows to the outside other than the path in which the oil moves in the direction of arrow C and outflows to the outside as described above.

According to the tapered roller bearing device of the fifth embodiment, the number z of the tapered rollers 103 is suppressed to 0.85/(DW/($\pi \cdot$dm)) or less, and an oil passage is enlarged by enlarging the space between the tapered rollers 103 that adjoin in the circumferential direction. Therefore, the oil outflow can be promoted. Therefore, the amount of oil in the bearing can be reduced, and the oil agitating resistance that depends on the amount of oil can be made small.

Moreover, according to the tapered roller bearing device of the fifth embodiment, the degree of widening in the oil outflow direction of the outer ring 102 is made large by setting the contact angle between the tapered raceway surface 115 of the outer ring 102 and the tapered rollers 103 to 25°. Therefore, the speed of the oil splashed to the tapered raceway surface 115 of the outer ring 102 due to a centrifugal force during the operation of the bearing in moving in the direction of arrow C along the tapered raceway surface 115 can be increased, and the oil can be made to efficiently outflow. Therefore, the oil agitating resistance can be made smaller, and the degree of the reduction in the torque of the bearing itself can be made larger.

Moreover, according to the tapered roller bearing device of the fifth embodiment, the portion 108 located on the major diameter side of the tapered rollers 103 in the retainer 104 has a shape roughly parallel to the oil flow such that the oil flow is not obstructed, and therefore, the oil flow can be rectified in the portion 108 located on the major diameter side. Therefore, the oil can be made to efficiently outflow.

Moreover, according to the tapered roller bearing device of the fifth embodiment, the amount of oil that enters the inside of the bearing can be suppressed by the portion 107 that is located on the minor diameter side of the retainer 104 and serves as the oil inflow suppression member (attachment), and therefore, the oil agitating resistance can further be reduced.

As described above, according to the tapered roller bearing device of the fifth embodiment, the amount of oil that enters the inside of the bearing can be suppressed by the portion 107 that is located on the minor diameter side of the retainer 104 and serves as the oil inflow suppression member, and the oil that has entered the inside of the bearing can be made to promptly outflow to the outside of the bearing with the oil outflow promotion structure constructed of the three portions. Therefore, oil does not stay in the bearing, and the oil agitating resistance can be reduced. Therefore, the torque of the bearing itself can be reduced, and the operational cost of the machine that has the tapered roller bearing device can be reduced.

Moreover, according to the tapered roller bearing device of the fifth embodiment, the end surface 109 of the flange portion located on the major diameter side of the inner ring 101 is coated with the diamond-like carbon that can suppress the frictions and frictional wear. Therefore, the torque can further be reduced by reducing the frictions between the end surface 110 located on the major diameter side of the tapered rollers 103 and the end surface 109 of the flange portion located on the major diameter side of the inner ring 101. Moreover, in spite of the provision of the oil flow suppression member, the occurrence of seizure between the end surface 109 of the flange portion located on the major diameter side of the inner ring 101 and the end surface 110 located on the major diameter side of the tapered rollers 103 can reliably be prevented, thanks to the diamond-like carbon.

In the tapered roller bearing device of the fifth embodiment, the portion 107, which was located on the minor diameter side and extended in the radial direction in which the opening 116 located on the oil inflow side was blocked from the immediate neighborhood of the tapered raceway surface 115 of the outer ring 102 to the outer peripheral surface of the end portion of the inner ring 102, served as the oil inflow suppression member, and the oil inflow was suppressed by the portion 107 located on the minor diameter side.

However, in the oil lubricated rolling bearing device of the present invention, it is acceptable to suppress the oil inflow by shielding the opening located between the inner ring and the outer ring on the oil inflow side of the bearing except for only a slight gap by attaching the end portion located on the inside diameter side of the shield plate made of steel of a hollow disk-like shape or the like to, for example, the end surface of the end portion located on the minor diameter side of the tapered raceway surface of the inner ring.

Otherwise, it is acceptable to suppress the oil inflow by attaching a shield plate that has a main body portion of a hollow disk-like shape and an attachment portion bent roughly at an angle of 90° from the main body portion and is made of steel to the outer peripheral surface of the end portion located on the minor diameter side of the tapered raceway surface of the inner ring. In detail, it is acceptable to suppress the oil inflow by shielding the opening located between the inner ring and the outer ring on the oil inflow side of the bearing except for only a slight gap by fixing the attachment portion of the shield plate to the outer peripheral surface of the end portion located on the minor diameter side of the tapered raceway surface of the inner ring.

The shield plate may be attached to any portion, and the shape of the shield plate is not limited to the hollow disk-like shape but allowed to be any shape so long as the opening located on the oil inflow side can be shielded except for a slight gap. Moreover, it is acceptable to constitute at least one of the oil inflow suppression member and the oil outflow promotion structure by part of members (i.e., inner ring, outer ring, rolling element and retainer) included in the roller bearing or constitute at least one of the oil inflow suppression member and the oil outflow promotion structure by a member (e.g., shield plate) other than the roller bearing.

Although the tapered raceway surface 115 of the outer ring 102 has been formed in contact with the tapered rollers 103 at a contact angle of 25° in the tapered roller bearing device of the fifth embodiment, it has been confirmed that the torque can sharply be reduced when the tapered raceway surface of the outer ring is set so as to come in contact with the tapered rollers at a contact angle of not smaller than 25° through experiments. According to the fact, the tapered raceway surface of the outer ring may be formed so as to come in contact with the tapered rollers at a contact angle greater than 25°.

Moreover, in the tapered roller bearing device of the fifth embodiment, the end surface 109 located on the tapered roller 103 side of the flange portion on the major diameter side of the tapered raceway surface of the inner ring 101 was coated with the diamond-like carbon (DLC) as one example of the hard coating.

However, instead of coating the end surface, located on the tapered roller side, of the flange portion on the major diameter side of the tapered raceway surface of the inner ring with the diamond-like carbon, the end surface located on the major diameter side of the tapered rollers brought in contact with the end surface on the tapered roller side may be coated with the diamond-like carbon.

Moreover, both the end surface on the tapered roller side of the flange portion on the major diameter side of the tapered raceway surface of the inner ring and the end surface located on the major diameter side of the tapered rollers brought in contact with the end surface on the tapered roller side may be coated with the diamond-like carbon.

Moreover, it is acceptable to suppress the seizure between the end surface of the flange portion located on the major diameter side of the inner ring and the surface located on the major diameter side of the tapered rollers by coating at least one of the end surface on the tapered roller side of the flange portion located on the major diameter side of the tapered raceway surface of the inner ring and the surface located on the major diameter side of the tapered rollers brought in contact with the end surface on the tapered roller side with a carbide hard coating of TiC or the like, a nitride hard coating of CrN, TiN, TiAlN or the like, a carbonitride hard coating of TiCN or the like, an oxide hard coating of $Al_2O_3$ or the like or a hard coating of WC/C (tungsten carbide carbon) or the like, as other examples of the hard coating. It is noted that the hard coating is only required to serve as a coating on at least one of a sliding portion of the end surface located on the tapered roller side of the flange portion on the major diameter side of the tapered raceway surface of the inner ring and a sliding portion of the end surface located on the major diameter side of the tapered rollers.

The present inventor investigated a torque reducing effect and an oil flow rate reducing effect when the inlet and the outlet of oil were shielded in the tapered roller bearing device for a pinion axle support of a differential.

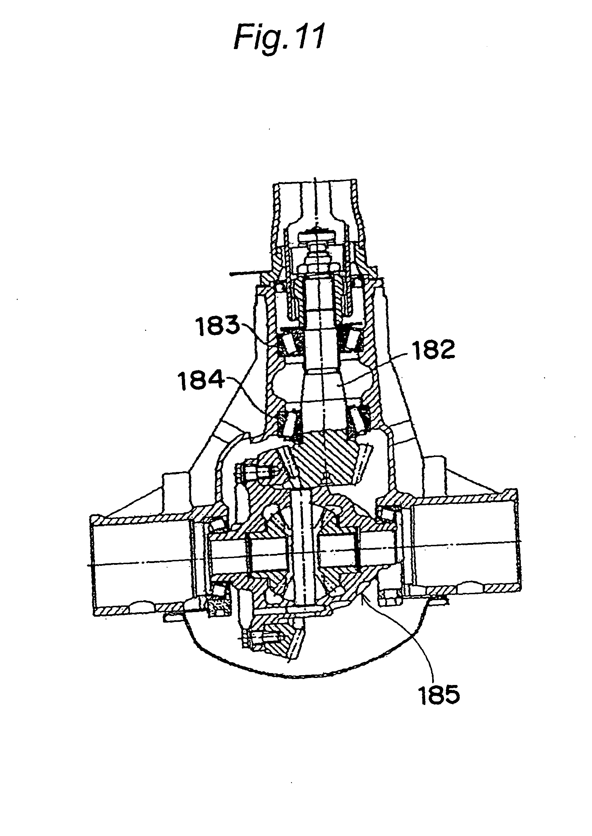

Fig. 11 is a view showing the structure of the differential used for the investigation.

Fig. 11 shows a drive shaft 182, a tail side tapered roller bearing device 183 (hereinafter indicated as the tail side), a head side tapered roller bearing device 184 (hereinafter indicated as the head side) and a differential gear 185.

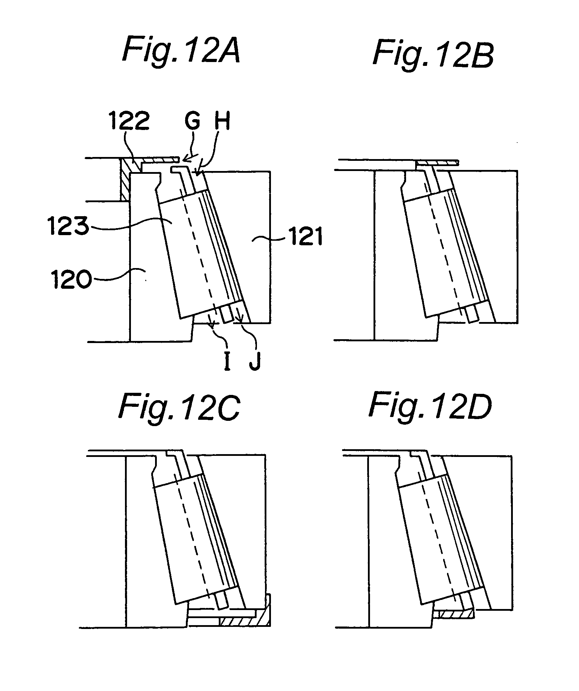

Figs. 12A through 12D are views showing the tapered roller bearing device used for the investigation.

In detail, Fig. 12A is a view showing the tapered roller bearing device (corresponding to the tapered roller bearing device of the first embodiment of the present invention) of Example 1 of the present invention in which an oil inlet between the inner ring and the retainer is partially blocked with a shield plate made of steel.

Fig. 12B is a view showing a tapered roller bearing device of a sixth embodiment of the present invention (hereinafter referred to as Example 2). In detail, the figure shows the tapered roller bearing device in which a shield plate made of steel that extends radially outwardly is provided at an end surface on an oil inflow side of a retainer and a space between the end portion of the retainer and an outer ring is roughly completely blocked on an oil inflow side.

Fig. 12C is a view showing a tapered roller bearing device of Comparative Example 1 in which a space between an outer ring and an end portion of a retainer is roughly completely blocked with a shield plate made of steel on an oil outflow side.

Fig. 12D is a view showing a tapered roller bearing device of Comparative Example 2 in which a space between an inner ring and an end portion of a retainer is blocked with a shield plate made of steel on an oil outflow side.

Fig. 12A shows an inner ring 120, an outer ring 121, a shield plate 122, a tapered roller 123 and oil flow directions G, H, I and J.

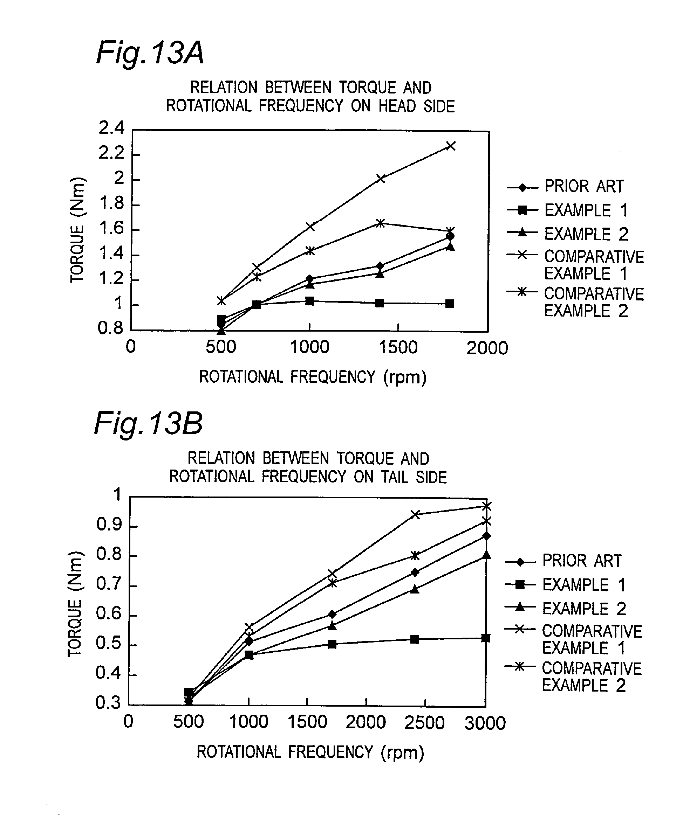

Fig. 13A is a graph showing relations between torque and rotational frequencies on the head side (head side bearing) of the four tapered roller bearing devices and the prior art tapered roller bearing provided with no shield plate, and Fig. 13B is a graph showing relations between torque and rotational frequencies on the tail side (tail side bearing) of the four tapered roller bearing devices and the prior art tapered roller bearing provided with no shield plate.

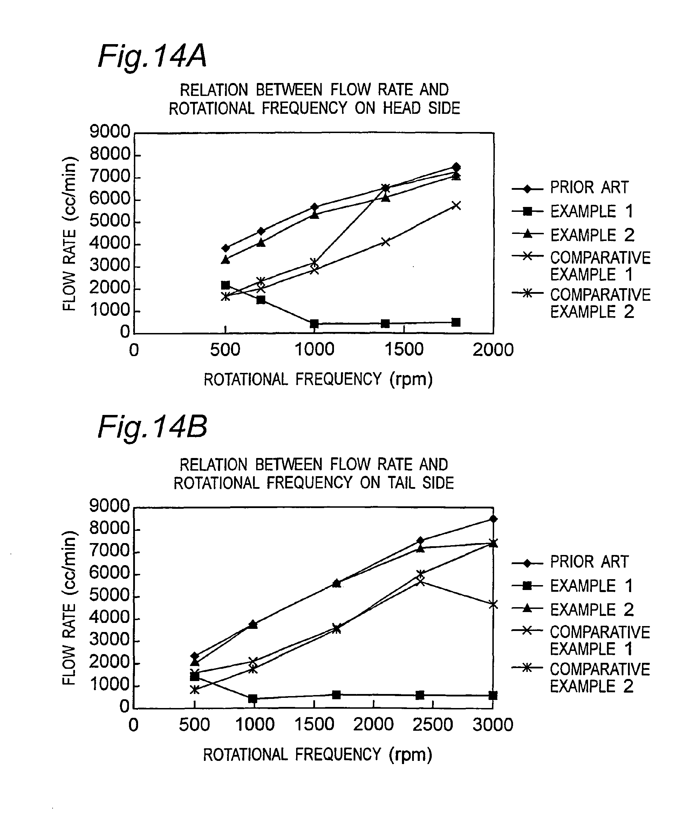

Fig. 14A is a graph showing relations between oil flow rates and rotational frequencies on the head side of the four tapered roller bearing devices and the prior art tapered roller bearing provided with no shield plate, and Fig. 14B is a graph showing relations between oil flow rates and rotational frequencies on the tail side of the four tapered roller bearing devices and the prior art tapered roller bearing provided with no shield plate.

In Figs. 13A, 13B, 14A and 14B, points indicated by the mark ■ represent measurement values of the tapered roller bearing device of Example 1 of the present invention of Fig. 12A, points indicated by the mark ▲ represent measurement values of the tapered roller bearing device of Example 2 of the present invention of Fig. 12B, points indicated by the mark × represent measurement values of the tapered roller bearing device of Comparative Example 1 of Fig. 12C, points indicated by the mark * represent measurement values of the tapered roller bearing device of Comparative Example 2 of Fig. 12D, and points indicated by the mark ♦ represent measurement values of the prior art tapered roller bearing.

As shown in Figs. 13A and 13B, the tapered roller bearing device of Comparative Example 1 of which the measurement values are indicated by the mark x has a torque value remarkably increased roughly in proportion to the rotational frequency at both the head side and the tail side of the bearings.

Moreover, the tapered roller bearing device of Example 2 of the present invention of which the measurement values are indicated by the mark ▲, the prior art tapered roller bearing of which the measurement values are indicated by the mark ♦ and the tapered roller bearing device of Comparative Example 2 of which the measurement values are indicated by the mark * have torque values smaller than the torque value of the tapered roller bearing device of Comparative Example 1 of which the measurement values are indicated by the mark × although the torque values are increased as the rotational frequency increases. In detail, the tapered roller bearing device of Embodiment 2 of the present invention of which the measurement values are indicated by the mark ▲ has a torque value smaller than that of the prior art tapered roller bearing of which the measurement values are indicated by the mark ♦. Moreover, the prior art tapered roller bearing of which the measurement values are indicated by the mark ♦ has a torque value smaller than that of the tapered roller bearing device of Comparative Example 2 of which the measurement values are indicated by the mark *. As shown in Figs. 13A and 13B, the tapered roller bearing device of the two Comparative Examples in which the opening located on the oil outflow side is blocked has a large oil agitating resistance and a large torque.

On the other hand, the tapered roller bearing device of Example 1 of the present invention of which the measurement values are indicated by the mark ■ has the smallest torque value, and the torque value is roughly constant at a low value in the high rotational frequency region in which the torque reduction is required most.

Moreover, as shown in Figs. 14A and 14B, the prior art tapered roller bearing of which the measurement values are indicated by the mark ♦ and the tapered roller bearing device of Example 2 of the present invention of which the measurement values are indicated by the mark ▲ exhibit roughly same tendencies in terms of variations in the oil flow rate, the greatest oil flow rate and increasing oil flow rates in accordance with an increase in the rotational frequency at both the head side and the tail side of the bearings.

Moreover, the tapered roller bearing device of Comparative Example 1 of which the measurement values are indicated by the mark × and the tapered roller bearing device of Comparative Example 2 of which the measurement values are indicated by the mark * exhibit an oil flow rate smaller than those in the prior art tapered roller bearing of which the measurement values are indicated by the mark ♦ and the tapered roller bearing device of Example 2 of the present invention of which the measurement values are indicated by the mark ▲ although they exhibit roughly same tendencies in terms of variations in the oil flow rate and increasing oil flow rates in accordance with an increase in the rotational frequency.

On the other hand, the tapered roller bearing device of Example 1 of the present invention of which the measurement values are indicated by the mark ■ has an oil flow rate decreasing as the rotational frequency shifts from a low-frequency region to a high-frequency region and has an oil flow rate constant at a low value in the high-frequency rotation region. Therefore, in the tapered roller bearing device of Example 1 of the present invention of which the measurement values are indicated by the mark ■, the oil agitating resistance can be minimized in the high-frequency rotation region.

For the above reasons, the tapered roller bearing device of Comparative Example 1 of which the measurement values are indicated by the mark x having the greatest torque value costs high in terms of the operational cost in the high-frequency rotation region, meaning that the bearing device is not suitable for high-speed operation.

Moreover, the tapered roller bearing device of Example 2 of the present invention of which the measurement values are indicated by the mark ▲ has a torque value smaller than that of the prior art tapered roller bearing of which the measurement values are indicated by the mark ♦, and the prior art tapered roller bearing of which the measurement values are indicated by the mark ♦ has a torque value smaller than that of the tapered roller bearing device of Comparative Example 2 of which the measurement values are indicated by the mark *.

For the above reasons, the tapered roller bearing device of Example 2 of the present invention of which the measurement values are indicated by the mark ▲, the prior art tapered roller bearing of which the measurement values are indicated by the mark ♦ and the tapered roller bearing device of Comparative Example 2 of which the measurement values are indicated by the mark *, which are also not best, are suitable for high-speed operation in the order of the tapered roller bearing device of Example 2 of the present invention of which the measurement values are indicated by the mark ▲, the prior art tapered roller bearing of which the measurement values are indicated by the mark ♦ and the tapered roller bearing device of Comparative Example 2 of which the measurement values are indicated by the mark *.

On the other hand, the tapered roller bearing device of Example 1 of the present invention of which the measurement values are indicated by the mark ■, in which the torque value does not increase however high the rotational frequency region is, is able to remarkably reduce the torque value in the high-speed region, remarkably reduce the operational cost in the high-speed operation and be best for high-speed operation. For the above reasons, it can be understood that the torque reducing effect of the tapered roller bearing device (tapered roller bearing device of the first embodiment) that has the following conditions (1) through (5) is remarkable. The conditions are: (1) the rolling elements are tapered rollers; (2) the inner ring is a rotating ring that has a tapered raceway surface, and the outer ring is a fixed ring that has a tapered raceway surface; (3) the inner ring has a flange portion brought in contact with the minor diameter end surfaces of the tapered rollers; (4) the shield plate having the protrusion that protrudes radially outwardly of the flange portion of the inner ring is provided; and (5) the retainer that retains the tapered rollers is provided, and the protrusion is placed in a place having an interval from the retainer in the axial direction of the inner ring.

(SEVENTH EMBODIMENT)

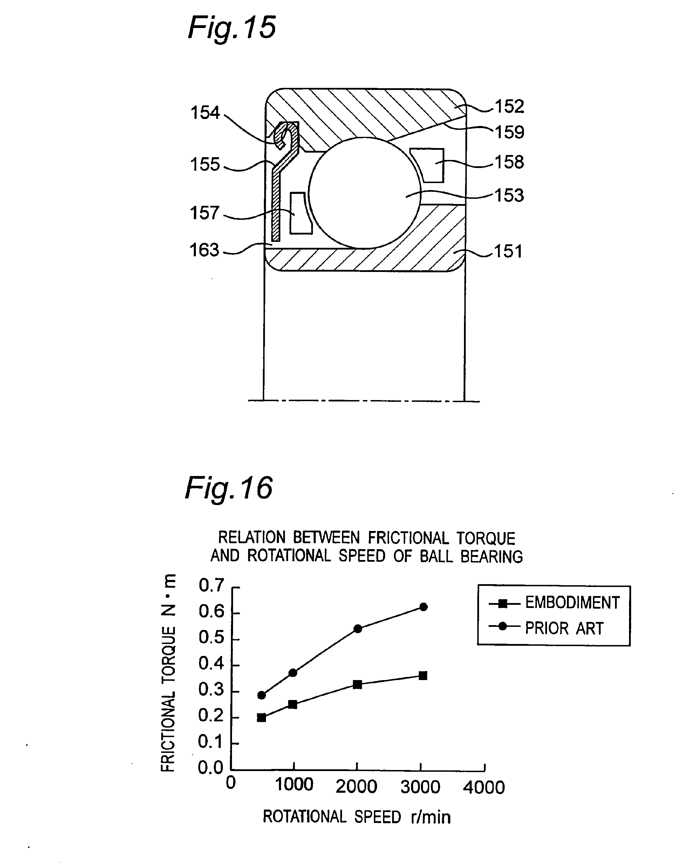

Fig. 15 is an axial sectional view of a ball bearing device of a seventh embodiment of an oil lubricated rolling bearing device of the present invention.

The ball bearing device has an inner ring 151, an outer ring 152, balls 153 and a shield plate 155 made of steel as one example of an oil inflow suppression member.

The plurality of balls 153 are arranged roughly at regular intervals in the circumferential direction in a state in which the balls are held between a raceway surface of the inner ring 151 and a raceway surface of outer ring 152 by a retainer 157.

An inner peripheral surface of the outer ring 152 on an oil outflow side on the right-hand side of the ball 153 in the sheet plane is a conical surface 159. The conical surface 159 is part of an oil outflow promotion structure and widens radially outwardly to promote the outflow of the oil that has entered the inside of the bearing.

Moreover, an annular recess 154 is formed at an end portion of an inner surface of the outer ring 152 on the oil inflow side on the left-hand side in the sheet plane. One end portion of the shield plate 155 is fixed to the annular recess 154. The shield plate 155 has a roughly hollow disk-like shape in the portion other than the one end portion and extends to a neighborhood of an outer peripheral surface of the inner ring 151 in the radial direction that is the direction in which the opening on the oil inflow side is blocked. The shield plate 155 shields the opening on the oil inflow side except for an oil passage 163 between an end portion located radially inwardly of the shield plate 155 and the outer peripheral surface of the inner ring 151.

Moreover, a portion 158 located on the oil outflow side of the retainer 157 with respect to the ball 153 extends roughly in the oil flow direction. The portion 158 plays the role of rectifying the oil flow and serves as part of the oil outflow promotion structure.

Moreover, the raceway surface of the inner ring 151, the raceway surface of the outer ring 152 and the surfaces of the balls 153 are coated with the DLC hard coating, so that seizure does not occur even in a state in which very little oil is located among the raceway surface of the inner ring 151, the raceway surface of the outer ring 152 and the surfaces of the balls 153.

Fig. 16 is a graph showing relations between rotational speeds and frictional torque of the ball bearing device of the seventh embodiment and the prior art ball bearing in which no shield plate is provided on the oil inflow side when the gear oil of 50 degrees is used.

In Fig. 16, the mark ■ represents measurement values of the ball bearing device of the seventh embodiment, and the mark ● represents measurement values of the prior art ball bearing.

As shown in Fig. 16, in the prior art ball bearing, the frictional torque is approximately 0.55 N·m when the rotational speed is 2000 r/min, and the frictional torque is approximately 0.64 N·m when the rotational speed is 3000 r/min. As described above, when the rotational frequency increases by 1000 r/min in the prior art ball bearing, the frictional torque, which has originally had a high value, is further largely increased, meaning that the bearing is not suitable for high-speed operation.

On the other hand, in the ball bearing device of the seventh embodiment, the frictional torque has a low value of approximately 0.33 N·m when the rotational speed is 2000 r/min, and the frictional torque is suppressed to a low value of approximately 0.37 N·m even when the rotational speed is increased to 3000 r/min. As described above, even when the rotational frequency is increased by 1000 r/min in the ball bearing device of the seventh embodiment, the frictional torque remains small, and an increase in the frictional torque is a little, meaning that the bearing device is suitable for high-speed operation.

According to the ball bearing device of the seventh embodiment, the shield plate 155 is the member that extends such that it blocks the opening on the oil inflow side, and therefore, oil other than the necessary minimum oil can reliably be prevented from entering the inside of the bearing from the opening. Moreover, the part 158 of the retainer 157 extending along the oil outflow direction on the oil outflow side, is the member that extends roughly in the oil flow direction. Therefore, the oil flow can be rectified, and the oil can be made to efficiently outflow.

Moreover, according to the ball bearing device of the seventh embodiment, the inner surface of the outer ring 152 located on the oil outflow side is the conical surface 159 in the cross section. Therefore, the speed of the oil splashed to the conical surface 159 of the outer ring 152 due to a centrifugal force during the operation of the ball bearing device can be increased in moving along the inner surface of the outer ring 152, and the oil can be made to efficiently outflow, allowing the degree of reduction in the torque of the ball bearing device itself to be increased.

For the above reasons, the torque can be remarkably reduced and the operational cost can remarkably be reduced in comparison with the prior art.

Moreover, according to the ball bearing device of the seventh embodiment, the raceway surfaces of the inner ring 151 and the outer ring 152 and the surfaces of the balls 153 are coated with the DLC hard coating. Therefore, the torque can be reduced by reducing the friction force between the balls 153 and the raceway surfaces of the inner ring 151 and the outer ring 152, and the seizure between the balls 153 and the two raceway surfaces can reliably be prevented.

Although the raceway surfaces of the inner ring 151 and the outer ring 152 and the surfaces of the balls 153 are coated with the DLC hard coating in the ball bearing device of the seventh embodiment, it is acceptable to coat only the raceway surfaces of the inner ring and the outer ring with the DLC hard coating or coat only the surfaces of the balls with the DLC hard coating.

Moreover, although the DLC hard coating has been used as the hard coating in the ball bearing device of the seventh embodiment, it is, of course, acceptable to use a carbide hard coating of TiC or the like, a nitride hard coating of CrN, TiN, TiAlN or the like, a carbonitride hard coating of TiCN or the like, an oxide hard coating of $Al_2O_3$ or the like or a hard coating of WC/C or the like in place of the DLC hard coating.

**Claims**

1. An oil lubricated rolling bearing device comprising:

   an inner ring;
   an outer ring;
   a plurality of rolling elements placed between the inner ring and the outer ring; and
   an oil inflow suppression member that suppresses oil inflow between the inner ring and the outer ring.

2. The oil lubricated rolling bearing device as claimed in claim 1, wherein
   the rolling elements are tapered rollers,
   the inner ring is a rotating ring that has a tapered raceway surface, and the outer ring is a fixed ring that has a tapered raceway surface,
   the inner ring has a flange portion brought in contact with minor diameter end surfaces of the tapered rollers,
   the oil inflow suppression member is a shield plate having a protrusion that protrudes radially outwardly of the flange portion,
   the device further comprises a retainer that retains the tapered rollers, and
   the protrusion is placed in a place having an interval from the retainer in an axial direction of the inner ring.

3. The oil lubricated rolling bearing device as claimed in claim 2, wherein
   the protrusion has an outside diameter that is not greater than an inside diameter of an end portion on a minor diameter side of the tapered raceway surface of the outer ring.

4. The oil lubricated rolling bearing device as claimed in claim 2, wherein
   a gap in the axial direction between the protrusion and the retainer is not greater than 3 mm.

5. The oil lubricated rolling bearing device as claimed in claim 2, wherein
   the inner ring and the shield plate are integrally formed.

6. The oil lubricated rolling bearing device as claimed in claim 1, wherein
   the rolling elements are tapered rollers,
   the inner ring is a rotating ring that has a tapered raceway surface, and the outer ring is a fixed ring that has a tapered raceway surface,
   the oil inflow suppression member is a shield plate having a protrusion that protrudes radially inwardly of an end portion on a minor diameter side of the tapered raceway surface of the outer ring,
   the device further comprises a retainer that retains the tapered rollers,
   the protrusion is placed in a place having an interval from the retainer in an axial direction of the outer ring, and
   a gap in the axial direction between the protrusion and the retainer is not greater than 3 mm.

7. The oil lubricated rolling bearing device as claimed in claim 6, wherein
   the outer ring and the shield plate are integrally formed.

8. The oil lubricated rolling bearing device as claimed in claim 1, comprising:

   an oil outflow promotion structure for promoting outflow of oil that enters between the inner ring and the outer ring.

9. The oil lubricated rolling bearing device as claimed in claim 8, wherein
   the rolling elements are tapered rollers, and
   assuming that a number of the tapered rollers is z, a mean diameter of the tapered rollers is DW and a pitch circle diameter of the tapered rollers is dm,
   the device comprises an arrangement structure in which the z tapered rollers that satisfies the following expression:

   $$z \leq 0.85/(DW(\pi \cdot dm))$$

   are arranged between the inner ring and the outer ring with a major diameter side of the tapered rollers facing toward an oil outflow side.

**10.** The oil lubricated rolling bearing device as claimed in claim 8, wherein
the rolling elements are tapered rollers, and
the oil outflow promotion structure comprises the tapered raceway surface of the outer ring set in contact with the tapered rollers at a contact angle of not smaller than 25°.

**11.** The oil lubricated rolling bearing device as claimed in claim 8, wherein
the oil inflow suppression member comprises a member that partially blocks an opening located between the inner ring and the outer ring on an oil inflow side, and the oil outflow promotion structure comprises a member that extends along an oil outflow direction on an oil outflow side.

**12.** The oil lubricated rolling bearing device as claimed in claim 9, wherein
at least one of an end surface on the major diameter side of the tapered rollers and an end surface of a flange portion that is provided on a major diameter side of a tapered raceway surface of the inner ring and brought in contact with the end surface on the major diameter side of the tapered rollers is coated with a hard coating.

**13.** The oil lubricated rolling bearing device as claimed in claim 10, wherein
at least one of an end surface on the major diameter side of the tapered rollers and an end surface of a flange portion that is provided on a major diameter side of a tapered raceway surface of the inner ring and brought in contact with the end surface on the major diameter side of the tapered rollers is coated with a hard coating.

**14.** The oil lubricated rolling bearing device as claimed in claim 8, wherein
the rolling elements are balls, and
the oil outflow promotion structure includes a portion of a shape that widens toward an oil outflow side in cross section on an inner peripheral surface of the outer ring.

**15.** The oil lubricated rolling bearing device as claimed in claim 14, wherein
at least one of the raceway surfaces of the inner ring and the outer ring and the balls is coated with a hard coating.

*Fig.1*

# Fig.2

# Fig.3

# Fig.4

Fig.5A  Fig.5B  Fig.5C

PRIOR ART

DEVELOPED PRODUCT A

DEVELOPED PRODUCT B

Fig.6A    Fig.6B    Fig.6C

PRIOR ART    DEVELOPED PRODUCT C    DEVELOPED PRODUCT D

## Fig.7

TORQUE RATIO AT 2000 r/min

## Fig.8

TORQUE RATIO AT 2000 r/min

# Fig.9 BACKGROUND ART

# Fig.10

*Fig.11*

*Fig.12A*

*Fig.12B*

122   G H

123

120

121

I J

*Fig.12C*

*Fig.12D*

## Fig.13A

RELATION BETWEEN TORQUE AND
ROTATIONAL FREQUENCY ON HEAD SIDE

- ◆ PRIOR ART
- ■ EXAMPLE 1
- ▲ EXAMPLE 2
- ✕ COMPARATIVE EXAMPLE 1
- ✱ COMPARATIVE EXAMPLE 2

## Fig.13B

RELATION BETWEEN TORQUE AND
ROTATIONAL FREQUENCY ON TAIL SIDE

- ◆ PRIOR ART
- ■ EXAMPLE 1
- ▲ EXAMPLE 2
- ✕ COMPARATIVE EXAMPLE 1
- ✱ COMPARATIVE EXAMPLE 2

## Fig.14A

**RELATION BETWEEN FLOW RATE AND ROTATIONAL FREQUENCY ON HEAD SIDE**

## Fig.14B

**RELATION BETWEEN FLOW RATE AND ROTATIONAL FREQUENCY ON TAIL SIDE**

## Fig.15

## Fig.16

RELATION BETWEEN FRICTIONAL TORQUE
AND ROTATIONAL SPEED OF BALL BEARING

## Fig.17

LOAD

AIR BEARING

OIL

LOAD CELL

40mm
(OIL HEIGHT)

BEARING TO BE TESTED

MOTOR

<table>
<tr><td colspan="2"><b>INTERNATIONAL SEARCH REPORT</b></td><td>International application No.<br>PCT/JP2004/016539</td></tr>
</table>

A. CLASSIFICATION OF SUBJECT MATTER
    Int.Cl$^7$  F16C33/66, 33/58, 19/36, 19/06, 33/76

According to International Patent Classification (IPC) or to both national classification and IPC

B.  FIELDS SEARCHED

Minimum documentation searched (classification system followed by classification symbols)
    Int.Cl$^7$  F16C33/58-33/66, 19/00-19/50, 33/76

Documentation searched other than minimum documentation to the extent that such documents are included in the fields searched
    Jitsuyo Shinan Koho          1922-1996    Toroku Jitsuyo Shinan Koho    1994-2005
    Kokai Jitsuyo Shinan Koho    1971-2005    Jitsuyo Shinan Toroku Koho    1996-2005

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 7-144548 A  (NSK Ltd.),<br>06 June, 1995 (06.06.95),<br>(Family: none) | 1,6<br>2-5,7,14-15 |
| X<br>Y | JP 11-336772 A  (NSK Ltd.),<br>07 December, 1999 (07.12.99),<br>Par. No. [0066]; Fig. 9<br>(Family: none) | 1,8,11<br>2-5,9-10,<br>12-13 |
| Y | Microfilm of the specification and drawings annexed to the request of Japanese Utility Model Application No. 185678/1986(Laid-open No. 89428/1988)<br>(Koyo Seiko Co., Ltd.),<br>10 June, 1988 (10.06.88),<br>Fig. 2<br>(Family: none) | 5,7 |

[X]  Further documents are listed in the continuation of Box C.            [ ]  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>04 February, 2005 (04.02.05) | Date of mailing of the international search report<br>01 March, 2005 (01.03.05) |
|---|---|
| Name and mailing address of the ISA/<br>    Japanese Patent Office | Authorized officer |
| Facsimile No. | Telephone No. |

Form PCT/ISA/210 (second sheet) (January 2004)

## INTERNATIONAL SEARCH REPORT

International application No.

PCT/JP2004/016539

C (Continuation).  DOCUMENTS CONSIDERED TO BE RELEVANT

| Category* | Citation of document, with indication, where appropriate, of the relevant passages | Relevant to claim No. |
|---|---|---|
| Y | Microfilm of the specification and drawings annexed to the request of Japanese Utility Model Application No. 105435/1986 (Laid-open No. 11928/1988) (Koyo Seiko Co., Ltd.), 26 January, 1988 (26.01.88), Figs. 1 to 6 (Family: none) | 9 |
| Y | JP 50-66635 A  (Koyo Seiko Co., Ltd.), 05 June, 1975 (05.06.75), Fig. 3 (Family: none) | 9 |
| Y | JP 4-211720 A  (SKF GmbH.), 03 August, 1992 (03.08.92), Figs. 1, 3 & US 5114248 A        & GB 2241994 A & DE 4007881 A        & FR 2659704 A & IT 1248096 A | 10 |
| Y | JP 9-177774 A  (NTN Corp.), 11 July, 1997 (11.07.97), Claims (Family: none) | 12-13,15 |
| Y | JP 9-177796 A  (NTN Corp.), 11 July, 1997 (11.07.97), Claims (Family: none) | 12-13,15 |
| Y | JP 2001-140870 A  (NSK Ltd.), 22 May, 2001 (22.05.01), Claims; Fig. 1 (Family: none) | 14-15 |
| P,Y | JP 2004-3641 A  (AB SKF), 08 January, 2004 (08.01.04), & DE 10220419 A1 | 1-15 |
| A | JP 40-15221 Y1  (Koyo Seiko Co., Ltd.), 02 June, 1965 (02.06.65), (Family: none) | 1-15 |
| A | Microfilm of the specification and drawings annexed to the request of Japanese Utility Model Application No. 106264/1985 (Laid-open No. 13228/1987) (Koyo Seiko Co., Ltd.), 27 January, 1987 (27.01.87), Figs. 3 to 4 (Family: none) | 1-15 |

Form PCT/ISA/210 (continuation of second sheet) (January 2004)